# EUROPÄISCHE PATENTSCHRIFT

(11) **EP 3 157 753 B1**
(45) Veröffentlichungstag und Bekanntmachung des Hinweises auf die Patenterteilung: **01.04.2020**
(21) Anmeldenummer: 15730711.7
(22) Anmeldetag: 08.06.2015
(51) Int. Cl.: B29C 49/42, B41J 3/407, B41F 15/08, B41J 11/00

(54) **VERFAHREN UND VORRICHTUNG ZUM BEDRUCKEN VON HOHLKÖRPERN**
INTERMITTENTLY OPERATING PRINTING MACHINE
PROCÉDÉ ET DISPOSITIF D'IMPRESSION DE CORPS CREUX

(30) Priorität: 18.06.2014 DE 102014108567
(43) Veröffentlichungstag der Anmeldung: 26.04.2017
(73) Patentinhaber: Dekron GmbH, 65779 Kelkheim (Taunus) (DE)
(72) Erfinder: TILL, Volker, 65719 Hofheim am Taunus (DE)
(74) Vertreter: Keil & Schaafhausen Patentanwälte PartGmbB
(86) Internationale Anmeldenummer: PCT/EP2015/062733
(87) Internationale Veröffentlichungsnummer: WO 2015/193138

(56) Entgegenhaltungen:
- EP-A1- 2 591 917
- EP-A2- 1 225 053
- CH-A1- 702 464
- DE-A1- 2 102 092
- GB-A- 1 320 102
- GB-A- 1 340 901
- US-A- 2 712 704
- US-A1- 2009 205 516
- US-A1- 2011 041 239

## Beschreibung

Die Erfindung betrifft ein Verfahren und eine Vorrichtung zum Bedrucken von Hohlkörpern, die bei der Herstellung aus Preforms durch Verstrecken in ihre endgültige Form gebracht werden. Bei den Hohlkörpern handelt es sich vorzugsweise um Flaschen aus Kunststoff oder Glas, die als vorgefertigte Preforms geliefert und vor der Abfüllung (in der Regel in der Abfüllanlage) durch Verstrecken in ihre endgültige Form gebracht werden. Das erfindungsgemäße Verfahren kann insbesondere diesen Verfahrensablauf integriert werden und die vorgeschlagene Vorrichtung kann dazu einfach mit bestehenden Anlagen kombiniert werden.

Digitaldruck oder Siebdruck/Offsetdruck wurde bisher auf Oberflächen von fertig hergestellten Flaschen sowohl aus Glas als auch Kunststoff angewandt. Diese fertig hergestellten Flaschen werden von Getränkeherstellern in Abfüllanlagen befüllt. Eine Bedruckung vor Ort in einer Abfüllanlage wird bisher meist nicht durchgeführt, erste Anlagen dafür sind aber in der Planung. Stattdessen werden Flaschen bisher etikettiert. Dabei ist zu beachten, dass der Produktionsprozess innerhalb von Abfüllanlagen eine ausgeklügelte Logistik hat und aufeinander abgestimmte, in einer Verkettung miteinander arbeitende Maschinen aufweist. Eine nachträgliche Platzierung von neuen Systemen / Maschinen ist kompliziert und in den meisten Fällen nicht durchführbar.

Unter Maschinen in Verkettung werden Maschinen verstanden, die in einer Bearbeitungslinie aufgebaut sind, über welche Bearbeitungslinie die Flaschen von einer zur nächsten Maschine transportiert und verarbeitet werden. Der Begriff Flasche soll hierbei im Rahmen dieser Beschreibung auch als synonym für einen zu behandelnden, beliebig geformten Behälter verstanden werden. Die Behandlung kann die Schritte Herstellen, Reinigen, Bedrucken und/oder Befüllen enthalten.

Ungünstig wirkt sich bei der Integration der Bedruckung von bspw. Kunststoffflaschen in bestehende Anlagen aus, dass sich mittlerweile ein sogenanntes Blocksystem für die Anlagen durchgesetzt hat, bei dem die Flasche direkt nach dem Verstrecken, insbesondere durch Blasen, bspw. sofort in einer mit der Blasmaschine (oder allgemeiner; Maschine zum Verstrecken) mechanisch verketteten Maschine befüllt wird. Das Herstellen der Flasche erfolgt in bekannter Weise durch Verstrecken des Preforms, das derart ausgebildet ist, dass die Flasche nach dem Verstrecken, insbesondere durch Aufblasen, die gewünschte Form erhält. Ggf. kann das Preform dazu erhitzt werden.

Eine Bedruckung der fertige Flasche könnte also nur nach einem solchen Blocksystem eingesetzt werden (also mit einer befüllten Flasche), was den Nachteil hat, dass bei Platzen einer Flasche (was zwar selten vorkommt) in der Druckmaschine erhebliche Schäden angerichtet werden können. Deswegen verbietet sich diese Anordnung sich bei Flaschen mit einer Innendruck aufweisenden Befüllung. Auch Flaschen mit stillen Getränken haben einen künstlichen Innendruck durch Zugabe von flüssigem Stickstoff, um die Stabilität der Flasche (insbesondere einer sich in der Praxis immer mehr durchsetzenden Kunststoffflasche) zu erhöhen und damit die Stapelbarkeit von Paletten zu ermöglichen.

Weiterhin ist bei den bekannten Systemen nachteilig, dass bereits sehr viele Flaschenabfüllanlagen installiert sind, deren Umrüstung auf Digitaldruck durch zusätzliche Druckmaschinenintegration und Umbau der Anlage erhebliche Kosten, verursacht sowohl durch Investitionen in zusätzliche Transporteure und Puffer als auch durch den Stillstand der Anlage während des Umbaus, nach sich ziehen würde.

Sinnvoller Weise kann sich also ein Digitaldruck direkt auf der Flasche bzw. dem Behälter nur mit einer Installation einer neuen Abfüllanlage durchsetzen. Damit kann aber kein Markenhersteller von Getränken sein Sortiment flächendeckend und schlagartig umstellen, um den Verbraucher nicht mit zwei verschiedenen Dekorationsarten zu verwirren, was zwangsläufig der Fall wäre, wenn man die Umstellung über einen längeren Zeitraum machen müsste.

DE 21 02 092 A1 offenbart ein Verfahren und eine Vorrichtung zum Herstellen von bedruckten Hohlkörpern wie Flaschen aus Vorformlingen. Auf einem Gestell sind einander nachgeordnet eine als Siebdruckvorrichtung ausgebildete Druckereinrichtung, eine Erwärmungseinrichtung und eine Aufblaseinrichtung angeordnet. Zwischen der Druckeinrichtung und der Aufblaseinrichtung ist eine Fördereinrichtung, vorgesehen, die durch die Erwärmungseinrichtung hindurchführt.

GB 1 320 102 A beschreibt ein Verfahren zum Herstellen von Flaschen aus Kunststoff mit Aufdruck. Dabei wird in einer Spritzform zunächst ein Vorformling gebildet. Auf den verfestigten Vorformling wird für die Inhaltsangabe, Herkunftsbezeichnung oder Werbung ein Druckbild im Siebdruck-, Offset-, Tiefdruckverfahren oder mittels bedruckter heißsiegelfähiger Folie (Warm-Offset-Druck) aufgebracht. Nach dem Bedrucken wird der Vorformling auf eine Temperatur erwärmt, die im plastischen oder vorzugsweise im thermoelastischen Bereich des verwendeten Kunststoffs liegt. Danach wird der Vorformling in eine Blasform gebracht und durch Einleiten von Blasluft durch seine Öffnung sowie durch axiales Strecken mit einem Stempel zu einer Flasche aufgeweitet.

Aufgabe der Erfindung ist es daher, eine Möglichkeit zum Bedrucken von Hohlkörpern, insbesondere Flaschen, vorzuschlagen, die flexibel auch in bestehende Anlagen integriert werden kann.

Diese Aufgabe wird erfindungsgemäß durch ein Verfahren mit den Merkmalen des Anspruchs 1 gelöst. Erfindungsgemäß wird dabei vorgeschlagen, den Preform vor dem Verstrecken zu dem Hohlkörper in die gewünschte Form zu bedrucken. Das Bedrucken erfolgt also vor dem Verstrecken des Preforms mit mindestens einer Farbe in einer Druckstation oder mehreren nacheinander angeordneten Druckstationen. Dabei erfolgt die Bedruckung erfindungsgemäß derart, dass sich erst nach dem Verstrecken bspw. durch Aufblasen das fertige Dekor auf dem Hohlkörper zeigt. Das Druckbild auf dem Preform selbst ist also entsprechend so verzerrt, dass sich die gewünschte Geometrie bzw. Darstellung des Drucks als Dekor oder Muster erst auf dem fertigen, d.h. verstrecken, Hohlkörper zeigt. Das Dekor oder Muster ist also das gewünschte Druckbild, das grafische und/oder Textelemente in einer oder mehreren Farben enthalten kann.

Gemäß einer besonders bevorzugten Ausführungsform der Erfindung handelt es sich bei dem Hohlkörper um einen rotationssymmetrischen Körper, insbesondere einen als Flasche ausgebildeten Behälter. Im Folgenden wird daher der Begriff "Flasche" auch synonym für Hohlkörper oder Behälter verwendet.

Für das Bedrucken der Preforms wird erfindungsgemäß ausgenutzt, dass das Verstrecken der Preforms in einem reproduzierbaren Prozess automatisiert erfolgt und die Formänderung des Preforms in den Hohlkörper, insbesondere in die Flasche, genau vorhersagbar ist. Dies kann entweder aufgrund theoretischer Ausdehnungsrechnungen erfolgen, die häufig bereits von dem Hersteller des Preforms bekannt sind. Diese Vorhersagbarkeit der Abmessungen des fertiggestellten Hohlkörpers innerhalb genau definierter Genauigkeitsgrenzen ist für die Anwendung des Herstellens der Flaschen (oder auch anderer Hohlkörper) notwendig, weil diese in der Regel automatisiert weiter verarbeitet, bspw. befüllt und bedruckt oder etikettiert, werden. Die Vorhersagbarkeit der Formänderung macht sich die Erfindung zunutze.

Gemäß einer bevorzugten Ausführungsform ist es daher möglich, dass die Verzerrung des Drucks mittels einer Abbildungsvorschrift ermittelt wird bzw. erfolgt, bei der bzw. durch die jeder Punkt des (verzerrten) Musters auf dem Preform einem Punkt des Musters auf dem fertigen Hohlkörper zugeordnet ist. Diese Abbildungsvorschrift kann erfindungsgemäß also angewendet werden, das (verzerrte) Druckbild zu errechnen, mit dem der Drucker angesteuert werden muss, um den Preform zu bedrucken. Die Abbildungsvorschrift lässt sich aus den theoretischen Ausdehnungsrechnungen ermitteln.

Alternativ oder zusätzlich, bspw. zu Überprüfungszwecken und/oder zur Qualitätssicherung des erfindungsgemäß vorgeschlagenen Bedruckens, kann die Formänderung des Preforms in den Hohlkörper auch empirisch ermittelt werden. Gemäß einer dazu erfindungsgemäß bevorzugten Ausbildung des Verfahren kann dies bspw. durch Aufdrucken eines definierten (bekannten) Musters auf das Preform und Erfassen dieses dann entsprechend verzerrten Musters auf dem fertigen Hohlkörper (insbesondere der Flasche) nach dem Verstrecken erfolgen. Das Erfassen des verzerrten Musters kann bspw. durch optisches per darstellt sein soll, automatisiert das (verzerrte) Druckbild für den Preform zu berechnen, welches dann auf den Preform aufgedruckt wird. Dies kann bspw. unter Verwendung der beschriebenen Ausdehnungsrechnungen bzw. Abbildungsvorschriften erfolgen, und vorzugsweise sowohl die Verzerrung des Druckbilds als auch die (lokal notwendige) Tintendichte berücksichtigen.

Erfindungsgemäß wird vorgeschlagen, dazu vorzugsweise Tinten zu verwenden, die als flexible Tinten eine Streckung von ca. 100% bis ca. 600 % erlauben. Dazu sind Tinten mit einer verdunstenden Trägerflüssigkeit für die Pigmente genauso geeignet, wie Tinten, die auf Monomerbasis unter Hinzugabe von Photoinitiatoren durch UV Licht als Energieeintrag zur Polymerisation aushärten. Beiden Tintensorten ist gemein, dass deren Aufbau so gestaltet werden kann, dass die Pigmentträger flexibel genug ausbildbar sind, um die Dehnungen beim Verstrecken bzw. Aufblasen des Preforms zur Flasche mitzumachen, d.h. entsprechend flexibel mit gedehnt werden. Diese Tinten können gemäß einer Ausführungsform erfindungsgemäß Tinten also sein, die UV-trocknend sind. Alternativ können erfindungsgemäß geeignete Tinten aber auch eine Trägerflüssigkeit aufweisen, die durch Verdunstung die Opazität (Maß für die Lichtundurchlässigkeit) des Drucks erhöht, was bei einer Expansion der Fläche, auf der der Druck aufgetragen wurde, durch Verstreckung des Preform von Vorteil ist. Erfindungsgemäß soll das Preform mit Tinten bedruckt werden, die entweder UV-härtend (UV-trocknend) sind oder sich durch Verdunstung der Trägerflüssigkeit verdicken und aushärten.

Im letzteren Falle wird erfindungsgemäß ergänzend vorgeschlagen, die Verdunstung dadurch zu beschleunigen, dass der Preform erst dann bedruckt wird, wenn er zumindest schon teilweise (bspw. für das Verstreckung durch Aufblasen) erwärmt wurde. Die Trocknungszeit sinkt dadurch erheblich, und die mögliche Migration und Produktschädigung durch die Trägerflüssigkeit werden unterbunden oder zumindest per darstellt sein soll, automatisiert das (verzerrte) Druckbild für den Preform zu berechnen, welches dann auf den Preform aufgedruckt wird. Dies kann bspw. unter Verwendung der beschriebenen Ausdehnungsrechnungen bzw. Abbildungsvorschriften erfolgen, und vorzugsweise sowohl die Verzerrung des Druckbilds als auch die (lokal notwendige) Tintendichte berücksichtigen.

Erfindungsgemäß wird vorgeschlagen, dazu vorzugsweise Tinten zu verwenden, die als flexible Tinten eine Streckung von ca. 100% bis ca. 600 % erlauben. Dazu sind Tinten mit einer verdunstenden Trägerflüssigkeit für die Pigmente genauso geeignet, wie Tinten, die auf Monomerbasis unter Hinzugabe von Photoinitiatoren durch UV Licht als Energieeintrag zur Polymerisation aushärten. Beiden Tintensorten ist gemein, dass deren Aufbau so gestaltet werden kann, dass die Pigmentträger flexibel genug ausbildbar sind, um die Dehnungen beim Verstrecken bzw. Aufblasen des Preforms zur Flasche mitzumachen, d.h. entsprechend flexibel mit gedehnt werden. Diese Tinten können gemäß einer Ausführungsform erfindungsgemäß Tinten also sein, die UV-trocknend sind. Alternativ können erfindungsgemäß geeignete Tinten aber auch eine Trägerflüssigkeit aufweisen, die durch Verdunstung die Opazität (Maß für die Lichtundurchlässigkeit) des Drucks erhöht, was bei einer Expansion der Fläche, auf der der Druck aufgetragen wurde, durch Verstreckung des Preform von Vorteil ist. Erfindungsgemäß soll das Preform also vorzugsweise mit Tinten bedruckt werden, die entweder UV-härtend (UV-trocknend) sind oder sich durch Verdunstung der Trägerflüssigkeit verdicken und aushärten.

Im letzteren Falle wird erfindungsgemäß gemäß einer bevorzugten Ausführung des Verfahrens ergänzend vorgeschlagen, die Verdunstung dadurch zu beschleunigen, dass der Preform erst dann bedruckt wird, wenn er zumindest schon teilweise (bspw. für das Verstreckung durch Aufblasen) erwärmt wurde. Die Trocknungszeit sinkt dadurch erheblich, und die mögliche Migration und Produktschädigung durch die Trägerflüssigkeit werden unterbunden oder zumindest eingeschränkt. Hierdurch ist es einfach möglich, innerhalb gesetzlicher Grenzwerte für die Migration von Chemikalien in den Innenraum des Behälters, insbesondere eines als Flasche für Lebensmittel und/oder Getränke ausgebildeten Behälters, zu bleiben.

Diese Erwärmung des Preform vor dem Bedrucken ist, bspw. durch einen geeigneten Temperaturschwellwert, von einem Erhitzen des Preforms zu unterscheiden, bei dem es zu Formänderungen des Preforms kommen kann. Ein solches Erhitzen ist erfindungsgemäß vorzugsweise zu vermeiden.

Auch abgesehen von der optionalen Erwärmung des Preforms vor dem Bedrucken ist ein weiterer Vorteil der Preform-Bedruckung außerdem eine geringere Migration von Tinten durch den Kunststoff, weil die Migration direkt von der bedruckten Fläche vor der Aushärtung abhängig ist. Weiterhin hängt dies von der Zeitdauer ab, innerhalb der die Oberfläche mit der noch flüssigen Tinte benetzt ist. Durch die kürzere Druckzeit wird bei Preforms wegen des geringeren Umfangs des Hohlkörpers die Tinte früher ausgehärtet und damit ebenfalls das Migrationspotential gesenkt. Dieser Effekt kann durch die zuvor beschriebene Erwärmung des Preforms vor dem Bedrucken noch verstärkt werden.

Der Auftrag kann als Siebdruck, Offsetdruck (insbesondere Rollenoffset) und/oder erfindungsgemäß als Digitaldruck erfolgen, wobei auch Kombinationen verschiedener Drucktechniken, vorzugsweise in unterschiedlichen Druckstationen und/oder mit unterschiedlichen Druckköpfen, erfolgen können.

Diese Bedruckung kann dann sowohl von unabhängigen Lieferanten oder auch in separaten Räumen erfolgen. Eine der Abfüllanlage vorgeschaltete Bedruckung kann erfindungsgemäß jedoch auch direkt vor der Befüllung installiert werden, um der Dekoration wenn gewünscht z. B. aktuelle Bezüge zu geben. Auch wäre eine personalisierte Dekoration mit entsprechender Weiterverfolgung und/oder späterer Re-identifikation dieser speziell geblasenen Flasche in einer Abfüllanlage möglich.

Ein Vorteil der Erfindung ist, dass damit auch ein extrem breiter Dekor mit den üblicherweise nur schmalen Druckköpfen bedruckt werden kann. Haben so ein Kopf normalerweise eine Druckbreite von 70 mm und die Flasche beim Blasen ein Streckverhältnis von 1:3, so ergibt sich eine Dekorbreite von 210 mm, für die normalerweise 3 Druckköpfe - extrem genau zueinander ausgerichtet - notwendig sind.

Da ein Preform nur einen kleinen Durchmesser hat (im Vergleich zu dem verstrecken Hohlkörper - und als Spritzgussteil eine wesentlich geringere Toleranz als fertig geblasene bzw. verstreckte Hohlkörper (insbesondere als Flasche ausgebildeter Behälter) hat, kann der Druckkopf näher an dem Preform platziert werden und der Spalt zwischen Kopf und Preform kleiner gehalten werden als zwischen einer fertigen Flasche und einem relativ dazu angeordneten Drucckopf. Das erhöht die Präzision des Drucks um ein Vielfaches und erlaubt den Einsatz von Druckköpfen höherer Auflösung sowie wegen des engeren Spalts auch eine höhere Druckgeschwindigkeit. Nur dadurch wird es möglich mehr Punkte auf die Oberfläche zu drucken als bei fertigen Flaschen.

Druckt man normalerweise Flaschen direkt nur mit 360 dpi, kann man aus den genannten Gründen Preforms erfindungsgemäß besonders bevorzugt mit etwa 1440 dpi bedrucken. Hat man ein Streckverhältnis von 1:3, so ergibt sich nach dem Blasen eine Auflösung von 480 dpi, die erheblich besser ist als die der Direktbedruckung von Flaschen. Jedenfalls ist es für den Digitaldruck erfindungsgemäß bevorzugt, mit einer Auflösung von mehr als 1000 dpi zu drucken. Damit bleibt bei einer Verstreckung des Preforms um ein Verhältnis 1:3 die Druckqualität zumindest in der Größenordnung des bekannten Drucks auf Flaschen (etwa 360 dpi).

In einer bevorzugten Variante kann das Bedrucken des Preforms direkt vor der Zufuhr des Hohlkörpers zu einer Maschine zum Verstrecken, insbesondere einer Blasmaschine, erfolgen. Damit wird der Preform unmittelbar vor dem Verstrecken zum Hohlkörper in seiner endgültigen Form, insbesondere als Flasche, bedruckt. Diese kann nach dem Verstrecken dann ggf. sofort befüllt werden.

Das Aufblasen der Flaschen zum Verstrecken erfolgt üblicher Weise unter Erwärmung des Preforms. In diesem Zusammenhang kann die beschriebene Vorerwärmung beim Bedrucken mit Tinten, welche eine verdunstende Trägerflüssigkeit aufweisen, bei dem Erwärmen für das Verstrecken durch Aufblasen zumindest teilweise genutzt werden, was einen energetischen Vorteil bedeutet. Damit können alle bisherigen Anlagen unverändert weiter betrieben werden, sowie auch Blockanlagen mit vorzugsweise digital bedruckten Flaschen betrieben werden. Außerdem ließen sich dann unter Nutzung der bisherigen Etikettierung unterschiedliche Dekorationen für z. B. unterschiedliche Produkte weiterhin nutzen.

Alle vorbeschriebenen Erfindungsgedanken, die bezüglich des Verstreckens eines Preform, insbesondere durch Aufblasen, beschrieben wurden, können im Rahmen des fachmännischen Könnens auch auf andere Arten des Verstreckens angewendet werden. Ein besonderer Vorteil der Anwendung des vorgeschlagenen Verfahrens auf das Verstrecken eines Preforms durch Aufblasen liegt aber darin, dass diese Art des Verstreckens eine gut vorhersehbare Formänderung erzeugt, die keine extremen Änderungen der Formänderungen (im Sinne eines räumlichen Gradienten der Formänderung auf der Oberfläche des Preforms) erzeugt.

Erfindungsgemäß wird auch eine Maschinenausführung zur Bedruckung der Preforms entsprechend Anspruch 12 vorgeschlagen. Eine erfindungsgemäße Vorrichtung zum Bedrucken von Preforms, aus denen ggf. unter Erhitzen durch Verstrecken, vorzugsweise durch Aufblasen Hohlkörper, in ihrer endgültigen Form erzeugt werden, weist mindestens eine Druckstation zum Bedrucken der Preforms mit mindestens einer Farbe auf. Bei den Hohlkörpern handelt es sich insbesondere um Flaschen, die aus Performs verstreckt werden. Eine bevorzugte Ausführung Erfindung betrifft Preforms aus Kunststoff, die bspw. durch Spritzgießen mit einer hohen Toleranzgenauigkeit hergestellt sind. Preforms aus Glas können im Rahmen der Erfindung, insbesondere bei Verstrecken durch Aufblasen, entsprechend bedruckt werden.

Die Vorrichtung ist erfindungsgemäß mit einer Transportvorrichtung zum taktweisen Bewegen des Preforms zu der mindestens einen Druckstation ausgestattet. Die Druckstation (bzw. jede der Druckstationen) weist mindestens einen Druckkopf auf und ist dazu eingerichtet, den Preform dort, d.h. in der Druckstation bspw. mittels der Transportvorrichtung, jeweils vor dem mindestens einen Druckkopf bzw. den mehreren Druckköpfen zu rotieren und dabei zu bedrucken. Dazu weist die Vorrichtung eine Recheneinheit auf, die dazu eingerichtet ist, das Bedrucken des Preforms zu steuern, wobei die Recheneinheit dazu eingerichtet ist, für das Steuern des Bedruckens das vorbeschriebene Verfahren oder Teile davon auszuführen. Für das Steuern des Bedruckens ist also insbesondere vorgesehen, den Druck bei der Bedruckung des Preforms derart verzerrt anzusteuern, dass sich die auf dem Hohlkörper nach dem Verstrecken des Preforms gewünschte Geometrie bzw. Darstellung des Dekors bei dem Verstrecken, insbesondere dem Aufblasen, des Preforms, ergibt. Auch alle weiteren Aspekte des vorbeschriebenen Verfahrens können alleine oder in beliebiger Kombination in der Recheneinheit zur Steuerung des Bedruckens realisiert sein.

Die Transportvorrichtung sieht taktweises Bewegen der Preforms, bevorzugt in Gruppen, jedoch auch einzeln vor. Ein Preform wird mittels der Transportvorrichtung also taktweise an dem mindestens einen Druckkopf vorbei transportiert, um den Preform in der an sich bekannten Weise vor dem Druckkopf oder den Druckköpfen rotieren zu lassen und dabei zu bedrucken. Dabei können zwar für die Preforms wegen der geringeren Abmessung gegenüber Flaschen andere Bauformen für Maschinen verwendet werden. Dennoch ist erfindungsgemäß eine solche Maschine (Vorrichtung) auch zum Bedrucken von Flaschen oder anderen Hohlkörpern grundsätzlich geeignet.

Erfindungsgemäß wird gemäß einer bevorzugten Ausführungsform daher vorgeschlagen, die Bedruckung auf einem Rad (Taktrad) als Transportvorrichtung für die Preforms durchzuführen, das sich um eine horizontale Achse dreht. Auf diesem Taktrad sind Halterungen für Preforms regelmäßig am Umfang angeordnet. Das Taktrad taktet intermittierend der Teilung der Halterungen entsprechend um seine Achse. An den Taktpositionen der Halterungen sind Bearbeitungsstationen angeordnet, insbesondere auch die Druckstationen bzw. Vorund/oder Jede Halterung für ein Preform kann dieses um seine eigene Achse drehen bzw. rotieren lassen, um diese in den Behandlungsstationen entsprechend auf ihrer Umfangsoberfläche zu behandeln, bspw. zu bedrucken. Bevorzugt sind die Preforms rotationssymmetrisch ausgebildet, wie dies bei Preforms für Flaschen üblich ist.

Der Antrieb der Drehbewegung geschieht erfindungsgemäß entweder für alle Halterungen gemeinsam über eine Verzahnung oder alternativ durch einen geeigneten Antrieb an jeder Station separat. Jedem Antrieb, also auch alternativ dem gemeinsamen, ist ein Encoder zugeordnet, mit dem jede Position während der Drehung des Preforms absolut bekannt ist. Dies dient dazu ein Druckstartsignal auszulösen, und erfolgt durch die Steuerung, die zum Bedrucken des Preforms eingerichtet ist.

Erfindungsgemäß wird bevorzugt weiter vorgeschlagen, die Halterungen so am Rotor zu befestigen, dass sie während der Drehung des Rades selbst gegenläufig so gedreht werden, dass die Preforms immer in der gleichen Achsausrichtung, also z.B. alle immer waagrecht oder alle immer senkrecht, zueinander stehen (Paternosterprinzip). Weiterhin kann erfindungsgemäß vorgeschlagen werden, dass die Achse der Preforms sowie die Druckkopfdüsenplatte im Prinzip, d.h. im Wesentlichen, senkrecht (oder waagrecht) zur Radachse und damit im Prinzip, d.h. im Wesentlichen, parallel zur Radscheibe ausgerichtet sind. Die Radscheibe ist der konstruktive Aufbau des Rades mit den Halterungen für die Preforms, wobei der Aufbau sich radial von der horizontalen Achse der Transportvorrichtung erstreckt. Die Druckkopfdüsenplatte weist die Anordnung der Druckdüsen auf, aus denen die Druckköpfe Tintentropfen ausstoßen, mit denen die Preforms bedruckt werden.

Neben dem taktenden Rad sind ortsfest Druckköpfe angeordnet, und das Rad taktet von Station zu Station und verharrt an der Station über die Dauer der jeweiligen Behandlungszeit, die im Prinzip der Rotationszeit des Preforms entspricht. Die Druckköpfe sollen dabei so ausgerichtet sein, dass sie nicht senkrecht nach unten, sondern bevorzugt horizontal die Tropfen (Tintentropfen) aussenden. Dies hat den Vorteil, dass die Schwerkraft immer in einem 90° Winkel auf die Tintentropfen einwirkt. Diese Anordnung vermeidet Verunreinigungen auf den Druckköpfen und den zu bedruckenden Performs im Gegensatz zu bekannten Prinzipen von Druckmaschinen, bei denen die Druckköpfe mit Ihrer Längsachse in Achsrichtung des Rades ausgerichtet sind und ihre Tintentropfen von oben nach unten schießen. Neben der bereits angesprochen Problematik mit durch Verunreinigungen ist an dieser bekannten Anordnung der Maschinen nachteilig, dass sich ein nur geringer Winkelgrad zur Bedruckung eignet, da ansonsten sich die taktenden zu bedruckenden Teile während des Transportschritts sich mit dem Platz für die Druckköpfe überschneiden.

In einer erfindungsgemäß besonders bevorzugten Anordnung können dagegen mehrere Druckköpfe pro Station angeordnet werden, bevorzugt erfindungsgemäß so, dass sie nicht in dem Bewegungsbereich der Transporteinrichtung (Raddrehung) liegen. Dies kann besonders bevorzugt dadurch erreicht werden, dass die Druckköpfe links und rechts bezogen auf die Transportrichtung der Preforms ortsfest neben der Transporteinrichtung der Preforms angeordnet sind.

In der erfindungsgemäßen Maschine zum Bedrucken eines Preforms dauert ein Druck nur ein 1/3 der Zeit im Vergleich zu dem Druck einer fertigen Flasche (d.h. dem Hohlkörper nach dem Verstrecken des Preforms), obwohl mit nur einem Druckkopf die 3-fache Fläche wegen der Konzentration bedruckbar ist und so ggf. mit höherer Pixeldichte gedruckt werden muss, damit die Druckqualität auf der fertigen Flasche bei Bedrucken des Preforms der Druckqualität bei einem Bedrucken der Flasche in ihrer endgültigen Form entspricht.

Diese Zeit für das Bedrucken eines Preforms beträgt mit derzeit üblichen Druccköpfen in der erfindungsgemäß beschriebenen Vorrichtung beispeilsweise ca. 0,3 sec pro Farbe, und könnte erfindungsgemäß halbiert werden, wenn man erfindungsgemäß zwei Druckköpfe in derselben Druckstation einander gegenüberliegend für dieselbe Farbe verwendet, da dann nur eine halbe Umdrehung des Preforms benötigt wird, um dessen gesamten Umfang mit dem Druckbild zu bedrucken.

Nimmt man zum Beispiel 0,5 sec (inklusive Nebenzeiten) für eine Bedruckungszeit pro Preform an und weitere ca. 0,5 sec als Transportzeit eines Preforms von einer Station zu einer nächsten Station (mit einer ersten Behandlung in der ersten Station und einer zweiten Behandlung in der nachfolgenden zweiten Station), so kann ein einzelnes Rad als Transportvorrichtung für die komplette Druckmaschine (im Sinne der erfindungsgemäßen Vorrichtung zum Bedrucken etwa 3.600 Preforms/h bedrucken, wenn sie mit ausreichend vielen Stationen für Farbauftrag (Bedrucken) und Aushärtung ausgeführt ist.

Braucht man höhere Leistungen (im Sinne höherer Stückzahlen), so können mehrere Radsystem-Vorrichtungen nebeneinander angeordnet und parallel betrieben werden. Da die Dimensionen eines Rad der Breite des Preforms von ca. 35 mm und der Länge des Druckkopfes von ca. 70 mm, also insgesamt 105 mm, entspricht, könnte eine Maschine für spätere 36.000 geblasene Flaschen/h mit 10 Radmodulen nur eine Fläche von 1050 mm x 1050 mm benötigen.

Die Zufuhr eines Preforms auf das Rad als taktweise Transportvorrichtung der erfindungsgemäßen Vorrichtung zum Bedrucken kann erfindungsgemäß wie folgt mit einer Zufuhreinrichtung vorgeschlagen werden: Während der Bedruckung steht das (Takt-)Rad über den oben beispielshaft aufgeführten Zeitraum von 0,5 sec (d.h. allgemeiner den Bedruckungszeitraum) still. Innerhalb dieser Zeit wird ein im Falle von Flaschen als Hohlkörper üblicher Weise mit einem Neckring ausgestatteter Preform mit dem Neckring auf einer Führungsschiene gleitend geführt, durch einen Pusher in eine Station des Rades geschoben und dort in der Halterung zentriert. Mit dem Drehmotor für das Preform wird eine Neckringklemmung bei Ein- und Ausgabe des Preforms dabei immer so ausgerichtet, dass der Preform auf- bzw. abgeschoben werden kann. Alternativ wird erfindungsgemäß vorgeschlagen, den Preform auf einen Dorn zu stecken und durch Klemmung oder alternativ durch Unterdruck zu fixieren.

Der Preform wird nach der Bedruckung und der Aushärtung aus der Station des (Takt-)Rades wieder in eine Führungsschiene, auf der der Neckring gleitet, durch eine Mechanik herausgeschoben. Dies kann ein Zylinder oder eine motorisch angetriebene Hebelmechanik sein. Alternativ wird erfindungsgemäß der Preform von seinem Dorn entweder weggeblasen, was eine bevorzugte Ausführungsform wäre, wenn der Druck nicht direkt vor dem Aufblasen geschieht, oder in eine Aufnahme fallen gelassen oder hineingeschoben oder hineingeblasen.

Alternativ wird erfindungsgemäß auch vorgeschlagen, dass ein Rad nicht nur ein Preform aufnimmt (sogenannter Einfachnutzen), sondern gleichzeitig parallel mehrere Preforms während eines Taktschrittes bedrucken kann (sogenannter Mehrfachnutzen). Dies kann bspw. über mehrere Zufuhreinrichtungen erfolgen, wobei eine Zufuhreinrichtung vorzugsweise jeweils eine Einrichtung für das Zuführen und eine Einrichtung für das Ausführen wie vorbeschrieben aufweisen kann.

Alternativ kann gemäß einer anderen Ausführungsform erfindungsgemäß auch vorgeschlagen werden, anstelle eines Taktrades als Transportvorrichtung für die Preforms einen Kettentrieb in Längstransportrichtung (d.h. einem Taktvorschub entlang einer Längsachse) vorzusehen, über den die Preforms weiter getaktet werden, wobei dieser Kettentrieb entweder horizontal taktet oder in einer platzsparenden Ausführung bevorzugt senkrecht die Preforms fördert. Durch die linienförmige Bewegung entfällt die vorgeschlagen gegenläufige Drehung zur Senkrechtausrichtung der Preforms, was das System einfacher machen kann. Entlang des Taktvorschubs ist dann die mindestens eine Druckstation zum Aufbringen der Tine angeordnet. Vorzugsweise befindet sich entlang des Taktvorschubs, insbesondere hinter der mindestens einen Druckstation, auch eine Aushärtstation zum Aushärten der in der Druckstation aufgebrachten Tinte. Die Recheneinheit kann dann weiter dazu geeignet und/oder eingerichtet sein, dass der Preform nacheinander an verschiedene Stationen (Durchstation, Aushärtestation) bewegt und dort jeweils durch entweder Bedrucken oder durch Systeme zum Aushärten der Tinte, vorzugsweise durch UV Licht, behandelt wird. Für die Behandlung mit UV-Licht weist die Aushärtstation dann vorzugsweise eine UV-Lampe auf.

Alle anderen vorgeschlagenen Erfindungsgedanken gelten auch für eine solche Bauform der Maschine bzw. Vorrichtung, so dass diese an dieser Stelle nicht erneut ausgeführt werden müssen.

Weitere Merkmale, Vorteile und Anwendungsmöglichkeiten ergeben sich auch aus der nachfolgenden Beschreibung einer bevorzugten Ausführungsform und der Zeichnung.

Es zeigen:
- Fig. 1: schematisch eine Vorrichtung zum Bedrucken eines noch als Preform ausgebildeten Hohlkörpers, der durch späteres Verstrecken seine endgültige Form erhält, gemäß einer besonders bevorzugten Ausführungsform der Erfindung, in der Frontansicht;
- Fig.2: schematisch die Vorrichtung gemäß Fig. 1 in der Seitenansicht; und
- Fig. 3: schematisch den Ablauf des erfindungsgemäßen Verfahrens zum Bedrucken eines Preforms entsprechend einer bevorzugten Ausführungsform.

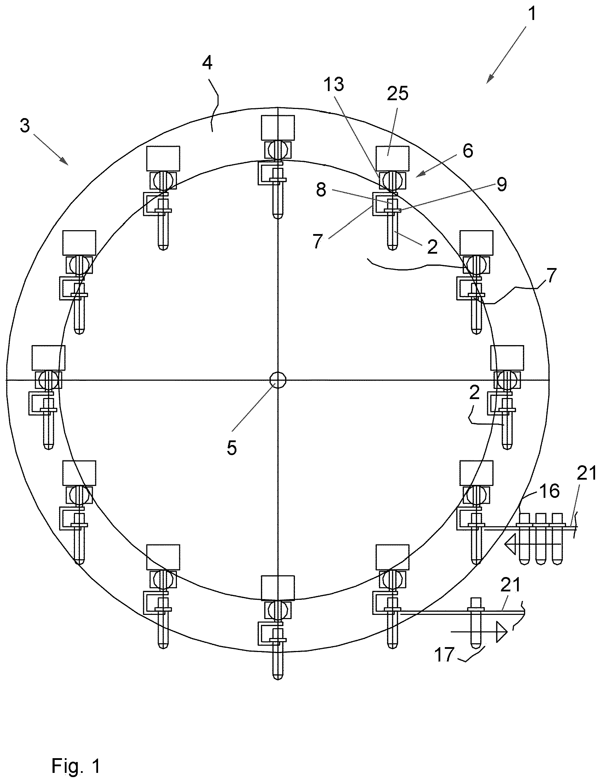

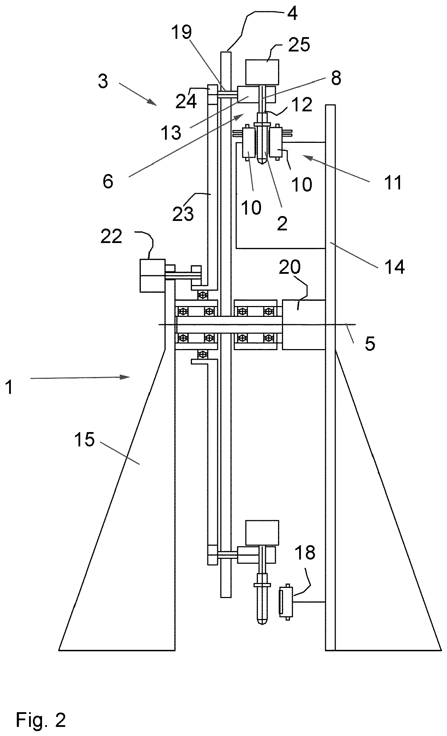

In Fig. 1 ist in der schematischen Seitenansicht eine auch als Druckmaschine bezeichnete Vorrichtung 1 zum Bedrucken eines als Preform 2 ausgebildeten Hohlkörpers als besonders bevorzugte Ausführungsform der vorliegenden Erfindung dargestellt. Die Vorrichtung 1 weist eine Transportvorrichtung 3 zum taktweisen Bewegen des Preforms 2 zu einer in Fig. 2 dargestellten Druckstation 11 auf.

Die Transportvorrichtung 3 ist im Wesentlichen als Taktrad 4 ausgebildet, das sich um eine horizontale Achse 5 des Taktrades intermittierend dreht. Auf diesem Taktrad 4 sind Halterungen 6 für die Preforms 2 regelmäßig verteilt am Umfang des Taktrades 4 angeordnet. Die als Aufnahme für die Preforms 6 dienenden Halterungen 6 sind als Bügelaufnahme 7 ausgebildet, in die die mit einem Neckring 9 versehenen Preforms 2 eingesteckt werden können. Die Bügelaufnahme 7 kann auch als Neckringhalterung bezeichnet werden. Jede Halterung 6 kann den Preform 2 um eine Rotationsachse 8 drehen, die mit der Symmetrieachse des in den Halter 6 bzw. die Bügelaufnahme 7 aufgenommen Preforms 2 übereinstimmt. Als Antrieb 25 für die Drehbewegung der Rotationsachse 8 ist ein Elektromotor vorgesehen, dem ein Encoder zugeordnet ist, mit dem jede Position der Rotationsachse 8 und damit des mitrotierten Preforms 2, absolut bekannt ist. Dies dient dazu, ein Drucksignal durch die nicht dargestellte Steuerung der Druckmaschine 1 auszulösen.

Fig. 2 zeigt die Vorrichtung 1 gemäß Fig. 1 in der Seitenansicht. Die Transportvorrichtung 3 mit dem auf der Achse 5 gelagerten Taktrad 4 weist in der dargestellten Taktposition im Bereich der Halterung 6 eine Druckstation 11 mit zwei einander gegenüberliegend angeordneten Druckköpfen 10 auf, die über als Striche dargestellte Halterungen an einem Druckkopfhalter 14 befestigt sind und über diese als Linien dargestellte Halterungen auch mit Tintenflüssigkeit zum Bedrucken des Preforms 2 versorgt werden. Der in der Halterung 6 aufgenommene Preform 2 ist in der Darstellung gemäß Fig. 2 zwischen den einander gegenüberliegend angeordneten Druckköpfen 10 angeordnet, die aus einer nicht näher bezeichneten Druckkopfdüsenplatte mit Druckdüsen Tintentropfen in horizontaler Richtung ausstoßen und damit auf dem Preform 2 ein Druckbild erzeugen. Das Preform 2 wird dabei um die Rotationsachse 8 durch den Antrieb 25 gedreht. Die Rotationsachse 8 ist dabei über eine Klemmung 12 mit dem Preform 2 verbunden, so dass sich dieses mit der Rotationsachse 8 mit dreht.

Die Druckköpfe 10 weisen aufgrund ihrer horizontalen Druckrichtung mit ihren Druckdüsen nicht nach oben oder unten, so dass eine Verschmutzung der Druckdüsen oder des Preforms 2 aufgrund der Schwerkraft und von den Druccköpfen 10 abfallenden Tintenresten üblicher Weise nicht auftreten.

Neben der einen hier dargestellten Druckstation 11 sind über den Umfang der Druckmaschine 1 entsprechend den verteilt angeordneten Halterungen 6 jeweils mehrere Druckstationen 11 angeordnet, so dass in jedem Maschinentakt mehrere Preforms 2 bedruckt werden können.

Wie in Fig. 1 dargestellt, weisen die verschiedenen Halterung 6 an den unterschiedlichen Umfangspositionen des Taktrades 4 jeweils eine solche Ausrichtung auf, dass die Rotationsachse 8 jeder Halterung 6 senkrecht ausgerichtet ist. Dazu ist eine Halter-Stelleinrichtung 13 vorgesehen, welche die Rotationsachse 8 über eine Achse 19 eines Zahnrades 24 jeweils so nachstellt, dass die Rotationachse 8 senkrecht ausgerichtet ist. Das Zahnrad 24 wird dabei über einen Zahnkranz 23 bewegt, der durch einen Drehantrieb 22 synchron mit einer Drehung des Taktrades 4 angesteuert wird, um die Rotationsachse 8 der Halter 6 jeweils vertikal auszurichten. Das Taktrad 4 selbst wird durch einen Drehantrieb 20 um die Achse 5 gedreht. Der Drehantrieb 22 des Zahnkranzes 23 und der Drehantrieb 20 des Taktrades 4 können durch einfache elektrische Antriebsmotoren, bspw. axiale Antriebsmotoren, gebildet sein.

Das eine, in der Darstellung rechte, Ende der Achse 5 mit dem Drehantrieb 20 des Taktrades 4 ist mit an dem Druckkopfhalter 14 gelagert. Das gegenüberliegende Ende der Achse 5 ist in einem ähnlich ausgebildeten Halter 15 der Achse 5 des Taktrades 4 gelagert, an welchem auch der Drehantrieb 22 des Zahnkranzes 23 festgelegt ist.

In Fig. 2 ist an einer anderen Station des Taktrades 4, in der Darstellung die der dargestellten Druckstation 11 mit Bezug auf die Achse 5 gegenüberliegende Station, eine Aushärtstation für die aufgedruckte Tinte ausgebildet, welche anstelle der Druckköpfe 10 eine UV-Lampe 18 aufweist. Da alle Halterung 6 auf dem Taktrad 4 identisch ausgebildet sind, entspricht auch diese dort gezeigte Halterung 6 der bereits beschriebenen Halterung 6 und muss an dieser Stelle nicht weiter erläutert werden.

Wie in Fig.1 gezeigt, weist die Druckmaschine 1 an zwei ausgewählten Stationen, die im Rahmen der Taktung angefahren werden, mindestens eine Zufuhr 16 der Preforms 2 und Abfuhr 17 der Preforms 2 auf, die jeweils als Zufuhreinrichtung 21 ausgebildet sein können, auf denen der Neckring 9 des Preforms 2 geführt ist. Über diese Zufuhreinrichtungen 21 werden die Preforms 2 in die Halterung 6 eingeschoben (Zufuhr 16) bzw. aus diesem wieder herausgezogen (Abfuhr 17).

Die Zufuhr 16 kann erfindungsgemäß in eine größere Anlage zum Verstrecken und nachfolgendem Befüllen der Preforms 2 bzw. Hohlkörper eingebunden sein. Dabei kann bspw. die Zufuhr 16 als Eingabe der Preforms 6 in das System verwendet werden. Die Abfuhr 17 führt die in der Druckmaschine 1 bedruckten Preforms 2 dann bspw. unmittelbar einer nicht dargestellten Blasmaschine zu, welche die Preforms 2 zu Flaschen verstreckt, die dann in einer nachfolgenden Abfüllmaschine befüllt werden.

Auch diese Anordnung der erfindungsgemäßen Druckmaschine in einer Gesamtanlage mit Verstreckungsmaschine (Blasmaschine) und Abfüllmaschine bildet den Gegenstand der vorliegenden Erfindung.

Eine in den Figuren nicht dargestellte Steuerung der Druckmaschine 1 ist dazu eingerichtet, das Bedrucken der Preforms 6 mit mindestens einer Farbe in den verschiedenen Druckstationen 11 zu steuern, wobei der Preform 6 jeweils vor den Druckköpfen 10 um die eigene Achse rotiert und dabei durch Aufspritzen von Tintentropfen durch die Druckköpfe 10 bedruckt wird. Dazu ist insbesondere vorgesehen, dass der Druck durch die Recheneinheit bei der Bedruckung des Preforms 6 derart verzerrt angesteuert wird, dass sich die auf dem Hohlkörper nach dem Verstrecken des Preforms 6 gewünschte Darstellung des Dekors bzw. Musters ergibt.

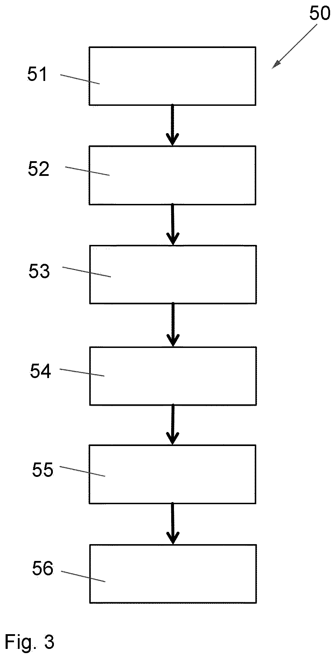

Dazu wird insbesondere das nachfolgend beispielhaft anhand der Fig. 3 skizzierte Verfahren ausgeführt.

Entsprechend dem dargestellten Verfahrensablauf 50 wird der Recheneinheit der Druckmaschine 1 in einem ersten Verfahrensschritt 51 das Muster der gewünschten Darstellung des Druckbildes auf dem fertig gestreckten Hohlkörper übermittelt.

In dem nachfolgenden Verfahrensschritt 52 wird auf Grundlage theoretischer Ausdehnungsrechnungen des Preforms 2 beim Verstrecken zu dem Hohlkörper eine Abbildungsvorschrift ermittelt, bei der bzw. durch die jeder Punkt des verzerrten Musters auf dem Preform 2 einem Punkt des gewünschten Musters auf den fertigen Hohlkörper zugeordnet ist.

Mit dieser Abbildungsvorschrift wird in dem Verfahrensschritt 53 das auf dem Preform 6 zu druckende Druckbild errechnet, wobei sowohl die Verzerrung der Geometrie als auch die Tintendichte entsprechend berücksichtigt wird.

In einem nachfolgenden Verfahrensschritt 54 wird der Druck mit dem verzerrten Muster auf den Preform 2 dann ausgeführt, wobei der Preform 2 durch die Halterung 6 der Druckmaschine 1 vor den Druckköpfen 10 in Rotation versetzt und die Druckköpfe 10 entsprechend angesteuert werden, um das verzerrte Muster als Druckbild auf den Preform 2 zu drucken.

Nach dem Drucken in Verfahrensschritt 55 wird das Taktrad 24 weiter gedreht und der frisch bedruckte Preform 6 in eine Aushärtstation überführt, in welcher der Preform 2 in der Halterung 6 vor der UV-Lampe 18 gedreht wird, damit die frisch aufgebrachte Tinte aushärtet.

In einem nachfolgenden, das Bedrucken abschließenden Verfahrensschritt 56 wird der Preform 2 dann der Abfuhr 17 übergeben, um den nun fertig bedruckten Preform 2 einer Verstreckungsmaschine zuzuführen und zu der gewünschten Form der Flasche (Hohlkörper) zu verstrecken.

Durch diese Verfahrensschritte ist es möglich, anstelle des fertigen Hohlkörpers (Flasche) unmittelbar das Preform 2 zu bedrucken, so dass der erfindungsgemäße Druck auch einfach in Anlagen nachgerüstet werden kann, in denen nach dem Verstrecken in einem nächsten Ablaufschritt unmittelbar die Befüllung des verstreckten Hohlkörpers (insbesondere der Flasche) stattfindet.

### Bezugszeichenliste

- 1: Vorrichtung zum Bedrucken eines Preforms (Druckmaschine)
- 2: Hohlkörper (Preform)
- 3: Transportvorrichtung
- 4: Taktrad
- 5: Achse des Taktrades
- 6: Halterung
- 7: Bügelaufnahme
- 8: Rotationsachse
- 9: Neckring
- 10: Druckkopf
- 11: Druckstation
- 12: Klemmung der Rotationachse an dem Preform
- 13: Halter-Stelleinrichtung
- 14: Druckkopfhalter
- 15: Halter der Achse des Taktrades
- 16: Zufuhr der Preforms
- 17: Abfuhr der Preforms
- 18: UV-Lampe
- 19: Achse
- 20: Drehantrieb des Taktrades
- 21: Zufuhreinrichtung
- 22: Drehantrieb des Zahnkranzes
- 23: Zahnkranz
- 24: Zahnrad
- 25: Antrieb für Drehbewegung der Rotationsachse

- 50: Verfahrensablauf
- 51-56: Verfahrensschritte

## Patentansprüche

1. Verfahren zum Bedrucken von Hohlkörpern, die bei der Herstellung aus Preforms (2) durch Verstrecken in ihre endgültige Form gebracht werden, wobei der Hohlkörper vor dem Verstrecken des Preforms (2) mit mindestens einer Farbe bedruckt wird, wobei der Druck derart verzerrt aufgebracht wird, dass sich die auf dem Hohlkörper nach dem Verstrecken des Preforms (2) gewünschte Darstellung des Musters bei dem Verstrecken des Preforms (2) ergibt,
**dadurch gekennzeichnet, dass** das Bedrucken des Preforms durch Digitaldruck erfolgt, und
dass das Preform mit Tinten bedruckt wird, die UV-härtend sind oder dass eine Tinte mit verdunstender Trägerflüssigkeit verwendet wird, wobei die Tinte auf ein vorgewärmtes Preform (2) gedruckt wird.

2. Verfahren nach Anspruch 1, **dadurch gekennzeichnet, dass** die Verzerrung des Drucks mittels einer Abbildungsvorschrift ermittelt wird, bei der jeder Punkt des Musters des Preforms (2) einem Punkt des Musters auf dem fertigen Hohlkörper zugeordnet ist.

3. Verfahren nach Anspruch 1 oder 2, **dadurch gekennzeichnet, dass** der Farbmengenauftrag bei dem Druck auf dem Preform (2) derart erfolgt, dass sich die auf dem Hohlkörper nach dem Verstrecken des Preforms (2) gewünschte Farbintensität bei dem Verstrecken des Preforms (2) ergibt.

4. Verfahren nach Anspruch 3, **dadurch gekennzeichnet, dass** die Ausdehnung einzelner Oberflächenbereiche bei dem Verstrecken ermittelt wird, um die notwendige Tintendichte auf dem Preform (2) zu bestimmen.

5. Verfahren nach einem der vorhergehenden Ansprüche, **dadurch gekennzeichnet, dass** aus der gewünschten Darstellung des Musters auf dem Hohlkörper automatisiert das Druckbild für den Preform (2) berechnet wird.

6. Verfahren nach einem der vorhergehenden Ansprüche, **dadurch gekennzeichnet, dass** als Druckfarbe eine flexible Tinte verwendet wird, die eine Streckung von 100% bis 600% erlaubt.

7. Verfahren nach einem der vorhergehenden Ansprüche, **dadurch gekennzeichnet, dass** der Digitaldruck mit einer Auflösung von mehr als 1000 dpi, insbesondere mit 1440 dpi, erfolgt.

8. Verfahren nach einem der vorhergehenden Ansprüche, **dadurch gekennzeichnet, dass** das Bedrucken des Preforms (2) vor der Zufuhr zu einer Maschine zum Verstrecken des Preforms (2) zu dem Hohlkörper erfolgt.

9. Vorrichtung zum Bedrucken von Preforms (2), aus denen durch Verstrecken Hohlkörper in ihrer endgültigen Form erzeugt werden, mit mindestens einer Druckstation (11) zum Bedrucken der Preforms (2) mit mindestens einer Farbe, wobei die Vorrichtung eine Transportvorrichtung (3) zum taktweisen Bewegen des Preforms (2) zu der mindestens einen Druckstation (11) aufweist und wobei die Druckstation (11) mindestens einen Druckkopf (10) aufweist und dazu eingerichtet ist, den Preform (2) jeweils vor dem mindestens einen Druckkopf (10) zu rotieren und dabei zu bedrucken, und wobei die Vorrichtung eine Recheneinheit aufweist, die dazu eingerichtet ist, das Bedrucken des Preforms (2) zu steuern, **dadurch gekennzeichnet, dass** Vorrichtung und insbesondere die Recheneinheit weiter dazu eingerichtet ist, das Verfahren nach einem der Ansprüche 1 bis 11 auszuführen.

10. Vorrichtung nach Anspruch 9, **dadurch gekennzeichnet, dass** die Preforms (2) an allen der mehreren Druckstationen (11) in ihrer Achsausrichtung immer gleich ausgerichtet sind, und dass die Druckköpfe (10) den Preform (2) nicht von oben nach unten, sondern von der Seite bedrucken, indem sie Tintentropfen horizontal aussenden.

11. Vorrichtung nach Anspruch 9 oder 10, **dadurch gekennzeichnet, dass** die Druckköpfe (10) links und rechts bezogen auf die Transportrichtung der Preforms ortsfest neben der Transportvorrichtung (3) der Preforms angeordnet sind.

12. Vorrichtung nach einem der Ansprüche 9 bis 11, **dadurch gekennzeichnet, dass** die Transportvorrichtung (3) derart eingerichtet ist, dass der Taktvorschub des Preforms (6) entlang einer Längsachse geschieht, die bevorzugt vertikal ausgerichtet ist, wobei entlang des Taktvorschubs die mindestens eine Druckstation (11) sowie vorzugsweise auch eine Aushärtstation zum Aushärten der in der Druckstation (11) aufgebrachten Tinte angeordnet sind.

## Claims

1. A method for printing hollow bodies which are brought into their final shape by stretching during production from preform (2), wherein before the stretching of the preform (2) the hollow body is printed with at least one ink, wherein the printing is applied in a distorted manner such that the desired depiction of the pattern on the hollow body after stretching the preform (2) is obtained when stretching the preform (2),
**characterized in that** the printing of the preform is accomplished by digital printing and
that the preform is printed with inks which are UV-curing or that an ink with evaporating carrier liquid is used, wherein the ink is printed on a pre-heated preform (2).

2. The method according to claim 1, **characterized in that** the distortion of the printing is determined by means of an imaging specification in which each dot of the pattern of the preform (2) is assigned to a dot of the pattern on the finished hollow body.

3. The method according to claim 1 or 2, **characterized in that** the quantity of ink is applied to the preform (2) during printing in such a manner that the desired ink intensity on the hollow body after stretching the preform (2) is obtained when stretching the preform (2).

4. The method according to claim 3, **characterized in that** the expansion of individual surface regions is determined during stretching in order to determine the necessary ink density on the preform (2).

5. The method according to one of the preceding claims, **characterized in that** the printed image for the preform (2) is calculated in an automated manner from the desired depiction of the pattern on the hollow body.

6. The method according to one of the preceding claims, **characterized in that** a flexible ink which allows a stretching of 100% to 600% is used as printing ink.

7. The method according to one of the preceding claims, **characterized in that** the digital printing is carried out with a resolution of more than 1000 dpi, in particular with 1440 dpi.

8. The method according to one of the preceding claims, **characterized in that** the printing of the preform (2) is carried out before being fed to a machine for stretching the preform (2) to form the hollow body.

9. A device for printing preforms (2) from which hollow bodies in their final shape are produced by stretching, comprising at least one printing station (11) for printing the preform (2) with at least one ink, wherein the device comprises a transport device (3) for cyclic movement of the preform (2) to the at least one printing station (11) and wherein the printing station (11) comprises at least one print head (10) and is adapted to rotate and in so doing print the preform (2) in front of the at least one print head (10) in each case and wherein the device comprises a processing unit which is adapted to control the printing of the preform (2), **characterized in that** the device and in particular the processing unit is further adapted to carry out the method according to one of claims 1 to 11.

10. The device according to claim 9, **characterized in that** the preforms (2) are always oriented identically in their axial direction at all the plurality of printing stations (11) and that the print heads (10) do not print the preform (2) from top to bottom but from the side by discharging ink drops horizontally.

11. The device according to claim 9 or 10, **characterized in that** the print heads (10) are arranged on the left and right relative to the transport direction of the preform in a fixed position next to the transport device (3) of the preform.

12. The device according to one of claims 9 to 11, **characterized in that** the transport device (3) is adapted in such a manner that the clock feed of the preform (6) takes place along a vertical axis which is preferably aligned vertically, wherein the at least one printing station (11) and preferably also a curing station for curing the ink applied in the printing station (11) are arranged along the clock feed.

## Revendications

1. Procédé d'impression de corps creux qui, lors de la fabrication, sont amenés de préformes (2) à leur forme finale par étirage, dans lequel le corps creux est imprimé avec au moins une peinture avant l'étirage de la préforme (2), dans lequel l'impression est appliquée de manière déformée de telle façon que la représentation du motif souhaitée sur le corps creux après l'étirage de la préforme (2) soit révélée lors de l'étirage de la préforme (2),
**caractérisé en ce que** l'impression de la préforme est effectuée par impression numérique, et
**que** la préforme est imprimée avec des encres qui sèchent aux UV et qu'une encre avec un liquide porteur qui s'évapore est employée, dans lequel l'encre est imprimée sur une préforme (2) préchauffée.

2. Procédé selon la revendication 1, **caractérisé en ce que** la déformation de l'impression est déterminée au moyen d'une consigne d'image dans laquelle chaque point du motif de la préforme (2) est attribué à un point du motif sur le corps creux fini.

3. Procédé selon la revendication 1 ou 2, **caractérisé en ce que** l'application de quantité de peinture lors de l'impression sur la préforme (2) a lieu de façon à ce que l'intensité de couleur souhaitée sur le corps creux après l'étirage de la préforme (2) soit révélée lors de l'étirage de la préforme (2).

4. Procédé selon la revendication 3, **caractérisé en ce que** la dilatation de zones surfaciques individuelles lors de l'étirage est calculée pour déterminer l'épaisseur d'encre nécessaire sur la préforme (2).

5. Procédé selon l'une des revendications précédentes, **caractérisé en ce que** l'image imprimée pour la préforme (2) est calculée de façon automatisée à partir de la représentation du motif souhaitée sur le corps creux.

6. Procédé selon l'une des revendications précédentes, **caractérisé en ce qu'**une encre flexible qui permet un étirement de 100% à 600 % est employée comme peinture d'impression.

7. Procédé selon l'une des revendications précédentes, **caractérisé en ce que** l'impression numérique est effectuée avec une résolution supérieure à 1000 dpi, en particulier de 1440 dpi.

8. Procédé selon l'une des revendications précédentes, **caractérisé en ce que** l'impression de la préforme (2) est effectuée avant l'amenée vers une machine pour l'étirage de la préforme (2) en le corps creux.

9. Dispositif d'impression de préformes (2) à partir desquelles des corps creux sont produits dans leur forme finale par étirage, comprenant au moins un poste d'impression (11) pour imprimer la préforme (2) avec au moins une peinture, dans lequel le dispositif présente un dispositif de transport (3) pour le déplacement cadencé de la préforme (2) vers l'au moins un poste d'impression (11) et dans lequel le poste d'impression (11) présente au moins une tête d'impression (10) et est agencé pour faire tourner et ainsi imprimer la préforme (2) respectivement devant l'au moins une tête d'impression (10), et dans lequel le dispositif présente une unité de calcul qui est agencée pour commander l'impression de la préforme (2), **caractérisé en ce que** le dispositif et en particulier l'unité de calcul est en outre agencée pour exécuter le procédé selon l'une des revendications 1 à 11.

10. Procédé selon la revendication 9, **caractérisé en ce que** les préformes (2) sont alignées toujours de la même façon dans leur alignement axial sur toute la pluralité de postes d'impression (11) et que les têtes d'impression (10) impriment la préforme (2) non pas du haut vers le bas mais par le côté en envoyant des gouttes d'encre horizontalement.

11. Procédé selon la revendication 9 ou 10, **caractérisé en ce que** les têtes d'impression (10) sont disposées fixes à côté du dispositif de transport (3) des préformes à gauche et à droite par rapport au sens de transport des préformes.

12. Procédé selon l'une des revendications 9 à 11, **caractérisé en ce que** le dispositif de transport (3) est ainsi agencé que l'avancement cadencé de la préforme (6) se produit le long d'un axe longitudinal qui est aligné verticalement de préférence, dans lequel l'au moins un poste d'impression (11) ainsi que de préférence également un poste de durcissage pour durcir l'encre appliquée dans le poste d'impression (11), sont disposés le long de l'avancement cadencé.
